# EUROPÄISCHE PATENTSCHRIFT

(11) **EP 0 552 157 B1**
(45) Veröffentlichungstag und Bekanntmachung des Hinweises auf die Patenterteilung: **28.09.1994**
(21) Anmeldenummer: 91912462.8
(22) Anmeldetag: 18.07.1991
(51) Int. Cl.: G05D 23/12

(54) **FLÜSSIGKEITSGEFÜLLTES THERMOSTATISCHES SYSTEM ZUR STEUERUNG VON HEIZUNGSVENTILEN**
LIQUID-FILLED THERMOSTATIC SYSTEM FOR CONTROLLING HEATING VALVES
SYSTEME THERMOSTATIQUE REMPLI AVEC UN LIQUIDE POUR LA COMMANDE DE VANNES DE CHAUFFAGE

(30) Priorität: 11.10.1990 DE 4032285
(43) Veröffentlichungstag der Anmeldung: 28.07.1993
(73) Patentinhaber: BUCHTA, Alfred, D-64342 Seeheim-Jugenheim (DE)
(72) Erfinder: ROTHENGASS, Wolfgang, D-6951 Limbach-Laudenberg (DE)
(74) Vertreter: Naumann, Ulrich, Dr.-Ing.
(86) Internationale Anmeldenummer: DE9100590
(87) Internationale Veröffentlichungsnummer: WO9207314

(56) Entgegenhaltungen:
- DE-A- 2 165 231
- DE-A- 2 518 443
- DE-A- 2 521 161
- GB-A- 591 289

## Beschreibung

Die vorliegende Erfindung betrifft ein flüssigkeitsgefülltes thermostatisches System zur Steuerung von Heizungsventilen, mit einer zur Sollwert-Temperatureinstellung und als Fühler dienenden, eine Überdrucksicherung aufweisenden Betätigungsvorrichtung und einer auf ein Ventilgehäuse aufsetzbaren, das Heizungsventil direkt beaufschlagenden Arbeitseinrichtung, wobei die Betätigungsvorrichtung über ein Kapillarrohr mit der Arbeitseinrichtung in Verbindung steht, wobei die Betätigungsvorrichtung einen Einstelldrehknopf, ein aus einer vorzugsweise topfförmigen Kapsel und einem Gehäuseboden bestehendes Gehäuse, ein innerhalb des Gehäuses koaxial angeordnetes Wellrohr und eine sich vorzugsweise kreisringförmig um das Gehäuse erstrekkende Befestigungsvorrichtung zur Befestigung des Gehäuses an einer Wand od. dgl. aufweist, wobei das Gehäuse und das Wellrohr gemeinsam einen veränderbaren Flüssigkeitsraum bilden und wobei das Wellrohr einen mittels des Einstelldrehknopfes und einer Einstellvorrichtung axial verstellbaren Wellrohrboden aufweist.

Flüssigkeitsgefüllte thermostatische Systeme der in Rede stehenden Art sind bereits bekannt (DE-PS 21 65 231). Bei diesen bekannten Systemen ist die Betätigungsvorrichtung derart ausgebildet, daß das innerhalb des Gehäuses koaxial angeordnete Wellrohr mit seinem dem Einstelldrehknopf zugewandten Ende an diesem über eine Lagerplatte befestigt ist. Das freie Ende des Wellrohres erstreckt sich in Richtung einer als Überdrucksicherung dienenden Rückseite des Gehäuses und ragt dabei erheblich in einen Bereich des Gehäuses, der von einer Befestigungsvorrichtung umgeben und durch diese mehr oder weniger von der Umgebung isoliert ist.

Folglich wird zumindest der vordere Bereich des das Wellrohr und das Gehäuse aufweisenden Fühlers der bekannten Betätigungsvorrichtung einerseits durch Abstrahlungen von der Wand beeinflußt, andererseits von der Gehäusewandung her nicht hinreichend belüftet. Demnach lassen sich mit dem bekannten System Raumtemperaturen nur sehr ungenau detektieren, vielmehr wird die Betätigungsvorrichtung durch zahlreiche Störfaktoren erheblich beeinflußt. Eine zufriedenstellende Temperaturregelung ist somit nicht mehr gewährleistet.

Der Erfindung liegt daher die Aufgabe zugrunde, ein flüssigkeitsgefülltes thermostatisches System zur Steuerung von Heizungsventilen anzugeben, dessen Betätigungsvorrichtung weitgehend unbeeinflußt von Störfaktoren auf die Raumtemperatur reagiert und die über die Raumtemperatur abgeleitete Stellgröße über ein Kapillarrohr an die auf das Ventilgehäuse aufgesetzte Arbeitseinrichtung leitet.

Das erfindungsgemäße flüssigkeitsgefüllte thermostatische System zur Steuerung von Heizungsventilen, bei dem die zuvor aufgezeigte Aufgabe gelöst ist, ist durch die Merkmale des Patentanspruches 1 beschrieben. Danach ist bei einem flüssigkeitsgefüllten thermostatischen System zur Steuerung von Heizungsventilen der in Rede stehenden Art der Fühler mit seinem dem Einstelldrehknopf abgewandten Ende im Boden des Gehäuses gehäusefest angeordnet. Dabei erstreckt sich das Wellrohr vom Boden aus im wesentlichen außerhalb des von der Befestigungsvorrichtung umgebenen Bereichs innerhalb des Gehäuses zum Einstelldrehknopf hin.

Es ist erkannt worden, daß bei dem den Ausgangspunkt der vorliegenden Erfindung bildenden, bekannten System der Fühler zu weit in jenen Bereich hineinragt, der als das Gehäuse abschirmender Befestigungsbereich bezeichnet werden kann. Die dort vorgesehene Befestigungsvorrichtung verhindert, daß Raumtemperatur zum Wärmetausch an den die Überdrucksicherung aufweisenden Teil des Gehäuses in hinreichendem Maße gelangt. Folglich funktioniert dort weder die Überdrucksicherung noch der Fühler in zufriedenstellendem Maße. Vielmehr sind einerseits die Überdrucksicherung, andererseits der hintere Bereich des Wellrohres derart von der Umgebung abgeschirmt bzw. isoliert, daß sie nicht in der Lage sind, die tatsächliche Raumtemperatur zu detektieren.

Weiter ist erkannt worden, daß die voranstehenden Probleme dann nicht auftreten, wenn der Fühler mit seinem dem Einstelldrehknopf abgewandten Ende im Boden des Gehäuses gehäusefest angeordnet ist. Vom Boden aus erstreckt sich das Wellrohr im wesentlichen außerhalb des von der Befestigungsvorrichtung umgebenen Bereichs innerhalb des Gehäuses zum Einstelldrehknopf hin. Mit dieser erfinderischen Maßnahme ist erreicht worden, daß der gesamte Fühler in einem Bereich angeordnet ist, in dem die Außenwandung des Gehäuses der Umgebungsatmosphäre direkt ausgesetzt ist.

In besonders vorteilhafter Weise weist die Einstellvorrichtung einen als Versteller dienenden, außerhalb des Gehäuses angeordneten und gegen Drehen gesicherten Regulierteller auf. Über diesen Regulierteller wird einerseits die Position des Wellrohres innerhalb des Gehäuses, andererseits das vom Wellrohr eingenommene Volumen vorgegeben.

Die Einstellvorrichtung weist desweiteren eine sich von dem Regulierteller aus durch den Gehäuseboden hindurch sowie durch das Wellrohr hindurch zum Wellrohrboden erstreckende Spanneinrichtung auf. Mittels dieser Spanneinrichtung ist der Wellrohrboden mit dem Regulierteller verbunden, wobei das die Spanneinrichtung umgebende Wellrohr selbst am Gehäuseboden ortsfest angeordnet ist.

Desweiteren ist der Einstelldrehknopf über ein Gewinde mit dem Regulierteller wirkverbunden. Durch Drehen des Einstelldrehknopfes läßt sich der Regulierteller zwischen einer vorderen, d.h. dem vorderen Ende des Einstelldrehknopfes zugewandten Endposition und einer hinteren, d.h. der Befestigungsvorrichtung zugewandten Endposition axial bewegen. Der Regulierteller kann sich jedoch aufgrund seines Antriebs über den Einstelldrehknopf weiter in Richtung des hinteren Endes der Betätigungsvorrichtung bewegen, so daß bei weiterer Bewegung des Reguliertellers in Richtung der hinteren Endposition das Wellrohr gegen die Kraft einer Feder durch die den Wellrohrboden mit dem Regulierteller verbindende Spanneinrichtung zusammengedrückt bzw. zusammengezogen wird. Bei Annäherung des Reguliertellers an die vordere Endposition nimmt das Wellrohr entsprechend seine maximale Baulänge ein.

Aus den voranstehenden Erläuterungen ergibt sich, daß das Wellrohr im zusammengezogenen Zustand ein wesentlich geringeres Volumen einnimmt als im voll ausgefahrenen bzw. entfalteten Zustand. Folglich läßt sich durch Einstellung des vom Wellrohr eingenommenen Raumes bzw. des durch das Wellrohr belegten Volumens und unter Berücksichtigung des Maßes der thermischen Ausdehnung der im Gehäuse befindlichen Flüssigkeit der sich im Gehäuse aufbauende Druck bei vorgegebener Temperatur einstellen bzw. läßt sich zur Betätigung des Heizkörperventils ein bestimmter Druck einer bestimmten Temperatur zuordnen.

Damit nun das System im Temperaturverlauf ohne wesentliche Zeitverzögerung arbeitet, ist es besonders vorteilhaft, wenn die Feder zwischen dem Wellrohrboden und dem Gehäuseboden unter Vorspannung angeordnet ist, die bei vorgegebenen Temperaturen unter Zugrundelegung eines bestimmten Ausdehnungskoeffizienten überwunden wird. Die Feder dient in einem solchen Falle desweiteren als Überdrucksicherung, wobei das Wellrohr bei Übertemperatur bzw. bei einem sich daraus ergebenden Überdruck gegen die Kraft der Feder zusammengedrückt wird, ohne daß der Regulierteller über den Einstelldrehknopf betätigt wird. In besonders vorteilhafter Weise wird der Mechanismus zum Einstellen des für die Flüssigkeit verbleibenden Volumens innerhalb des Gehäuses zur Übertemperatur- bzw. Überdrucksicherung genutzt. In konstruktiv einfacher Weise ist dazu keine weitere gesonderte Vorrichtung erforderlich.

In weiter vorteilhafter Weise ist die Spanneinrichtung mittels einer zumindest teilweise durch den Regulierteller hindurchragenden Schraubeinrichtung - von der Rückseite des Reguliertellers bzw. der Betätigungsvorrichtung her - justierbar. Dies hat den großen Vorteil, daß sich das in Rede stehende System - vor Montage der Betätigungsvorrichtung an einer Wand oder dgl. -, vorzugsweise über eine °C-Skala, mühelos von der Rückseite her justieren, d.h. auf ein bestimmtes für die Flüssigkeit zur Verfügung stehendes Volumen innerhalb des Gehäuses - bei vorgegebener Temperatur - einstellen und somit eichen läßt.

Hinsichtlich einer problemlosen Anbringung der Betätigungseinrichtung an einer Wand und einer gleichzeitigen Isolierung der Betätigungseinrichtung von der Wand ist es besonders vorteilhaft, wenn auf der dem Einstelldrehknopf abgewandten Seite des Reguliertellers mit Abstand dazu eine Abschlußplatte zur Anlage an die Wand od. dgl. vorgesehen ist. Durch Vorkehrung dieser Abschlußplatte ist das die Flüssigkeit enthaltende Gehäuse über mindestens zwei räumlich voneinander getrennte Lufträume isoliert. Einerseits besteht zwischen dem Gehäuseboden und dem Regulierteller ein Luftraum, andererseits zwischen dem Regulierteller und der Abschlußplatte. Diese beiden Lufträume wirken hinsichtlich der von der Wand abgestrahlten, der Raumtemperatur nicht entsprechenden Temperatur als Puffer bzw. Isolierung. Im übrigen dient die Abschlußplatte als zusätzliche Anlagefläche an die Wand und wirkt dadurch stabilisierend.

Hinsichtlich der Ausgestaltung der Befestigungsvorrichtung ist es besonders vorteilhaft, wenn diese gemeinsam mit der Abschlußplatte eine Art Konsole bildet. In diesem Falle stellen die Befestigungsvorrichtung und die Abschlußplatte eine konstruktive und funktionale Einheit dar.

Damit nun der Einstelldrehknopf sicher das Gehäuse umgibt und mit seiner gesamten Außenfläche zur Betätigung verfügbar ist, sollte der Einstelldrehknopf und die Befestigungsvorrichtung mittels einer Rasteinrichtung drehbar miteinander verbunden sein. Eine solche Verrastung hätte den großen Vorteil, daß beim Drehen des Einstelldrehknopfes dieser sich nicht ungewollt vom Gehäuse bzw. von der Befestigungsvorrichtung löst. Dazu könnte der hintere Bereich des Einstelldrehknopfes eine ringförmige oder partiell ausgebildete Nut aufweisen, in die Vorsprünge der Befestigungseinrichtung beim Aufschieben des Einstelldrehknopfes auf das Gehäuse bzw. beim Einschieben des Einstelldrehknopfes in die Befestigungsvorrichtung einrasten. Selbstverständlich könnten die jeweiligen Rastelemente auch umgekehrt ausgebildet sein, d.h. die Nut könnte an der Befestigungsvorrichtung und der Einstelldrehknopf könnte entsprechend mit Ansätzen od. dgl. versehen sein.

Nachfolgend wird nun die als Verbindung zwischen dem Wellrohrboden und dem Regulierteller dienenden Spanneinrichtung näher beschrieben.

Diese Spanneinrichtung könnte beispielsweise eine Teleskopspindel und ein Einstellstück zum Einstellen der Teleskopspindel bzw. zum Festlegen der Position der Teleskopspindel relativ zum Regulierteller umfassen. Eine solche Teleskopspindel hätte den großen Vorteil, daß die Betätigungsvorrichtung im Vergleich zu einer Betätigungsvorrichtung mit starrer Spindel eine nur geringe Bauhöhe benötigt, dabei jedoch durch die Teleskopspindel hinreichend stabil gehalten wird. Wesentlich ist jedenfalls, daß bei maximal auftretenden Temperaturen von etwa 55 °C bis 60 °C die Spindel einen Hub von etwa 9 mm durchfahren können muß.

Ebenso könnte die Spanneinrichtung neben dem Einstellstück ein aus Metallitze bestehendes Seil aufweisen. Dieses Seil würde - anstelle der Teleskopspindel - die Verbindung zwischen dem Wellrohrboden und dem Regulierteller darstellen. Auch hier würde das Einstellstück die Position zum Regulierteller bzw. die innerhalb des Wellrohres verfügbare Länge des Seils festlegen. Das Seil könnte in vorteilhafter Weise aus einer verdrillten Metallitze hergestellt sein. Schließlich könnte anstelle eines Seils eine vorzugsweise aus Metall bestehende Kette die Verbindung zwischen dem Wellrohrboden und dem Regulierteller bilden.

Die Verwendung eines Seils oder einer Kette innerhalb des Wellrohres hätte im Gegensatz zur Verwendung einer Teleskopspindel den weiteren großen Vorteil, daß sich das Seil bzw. die Kette auf eine wesentlich geringere Baugröße zusammendrücken läßt, so daß das Maß, um das das Wellrohr - in seiner Funktion als Überdrucksicherung - zusammendrückbar bzw. komprimierbar ist, im Rahmen der schadlosen Komprimierbarkeit des Wellrohres erheblich vergrößert ist. Hier spielt die Bautiefe eine nur untergeordnete Rolle.

Insbesondere hinsichtlich einer langen Lebensdauer ist das Wellrohr in vorteilhafter Weise als Metallbalg ausgeführt. Bei einer solchen Ausführung könnte der Balgboden in vorteilhafter Weise mit dem Wellrohr bzw. dem Metallbalg verlötet sein. Hier läßt sich eine einwandfreie Abdichtung zwischen Metallbalg und Wellrohrboden erzielen.

Damit nun eine einwandfreie Belüftung des Außenmantels des Gehäuses gewährleistet ist, ist der Einstelldrehknopf in besonders vorteilhafter Weise mit Luftdurchtrittsöffnungen zur Belüftung der Außenwandung des Gehäuses versehen. Diese Luftdurchtrittsöffnungen sind in vorteilhafter Weise über die gesamte Baulänge, d. h. in axialer Richtung des Einstelldrehknopfes, ausgebildet.

Abgesehen von der durch das Wellrohr und dessen "Innenleben" gebildeten Überdruck- bzw. Übertemperatursicherung läßt sich in vorteilhafter Weise eine weitere Überdruck- bzw. Übertemperatursicherung vorsehen. Bei Übertemperatur könnten nämlich die Luftdurchtrittsöffnungen über ein vom Wellrohr her betätigtes Getriebe zumindest teilweise verschlossen werden. Mit anderen Worten würde bei einem Ansprechen der durch das Wellrohr gebildeten Überdrucksicherung eine externe Überdrucksicherung dahingehend aktiviert werden, daß die Betätigungsvorrichtung von auβen her abgeschirmt würde, daß also der Temperatureinfluß von der Betätigungsvorrichtung ferngehalten wird. Dabei könnten die Luftdurchtrittsöffnungen mittels Lüftungsklappen verschlossen werden. Ebenso könnten die Luftdurchtrittsöffnungen über eine die Luftdurchtrittsöffnungen zumindest teilweise abdeckende Hülse verschlossen werden. Diese Hülse würde von hinten her, d.h. von der Wand her, in oder ggf. über den Einstelldrehknopf geschoben werden. Aufgrund der dabei erforderlichen Bautiefe müßten die zum Schließen der Luftdurchtrittsöffnungen dienenden Klappen im Normalzustand der Betätigungsvorrichtung in eine hinter der Betätigungsvorrichtung anzuordnende Schalterdose hineinragen. Eine solche Schalterdose würde sich - hinter der Betätigungsvorrichtung - unter Putz befinden.

Hinsichtlich einer vorgebbaren Raumtemperatur ist es besonders vorteilhaft, wenn zwischen dem Einstelldrehknopf und der Konsole eine die Drehung des Einstelldrehknopfes in einer vorgegebenen Drehposition verhindernde, manuell lösbare Arretiereinrichtung wirkt. Die Arretierung erfolgt dann bei einer eine vorgegebene Temperatur regelnden Drehposition des Einstelldrehknopfes. Dabei könnte die Arretiereinrichtung einen der Konsole zugeordneten Anschlag, eine dem Einstelldrehknopf zugeordnete Nase sowie eine ebenfalls dem Einstelldrehknopf zugeordnete Taste oder dgl. aufweisen. Der Anschlag wäre dann in besonders vorteilhafter Weise durch Betätigen der Taste oder dgl. wegschiebbar bzw. wegdrückbar. Die Taste oder dgl. dient dann schließlich als Entriegelungsmechanismus. Unter konstruktiven Gesichtspunkten ist es schließlich vorteilhaft, wenn die Taste oder dgl. integrierter Bestandteil des Einstelldrehknopfes ist.

Es gibt nun verschiedene Möglichkeiten, den Gegenstand der vorliegenden Erfindung in vorteilhafter Weise auszugestalten und weiterzubilden. Dazu ist einerseits auf die nachgeordneten Patentansprüche, andererseits auf die Erläuterung von zwei Ausführungsbeispielen der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen der Lehre erläutert. In der Zeichnung zeigt
- Fig. 1: in einer geschnittenen Darstellung ein erstes Ausführungsbeispiel des erfindungsgemäßen Systems, wobei die Spanneinrichtung als Teleskopspindel ausgeführt ist,
- Fig. 2: in einer geschnittenen Darstellung ein zweites Ausführungsbeispiel des erfindungsgemäßen Systems, wobei die Spanneinrichtung als Seil ausgeführt ist und
- Fig. 3: in einer geschnittenen Darstellung ein drittes Ausführungsbeispiel des erfindungsgemäßen Systems, wobei eine weitere Übertemperatursicherung vorgesehen ist.

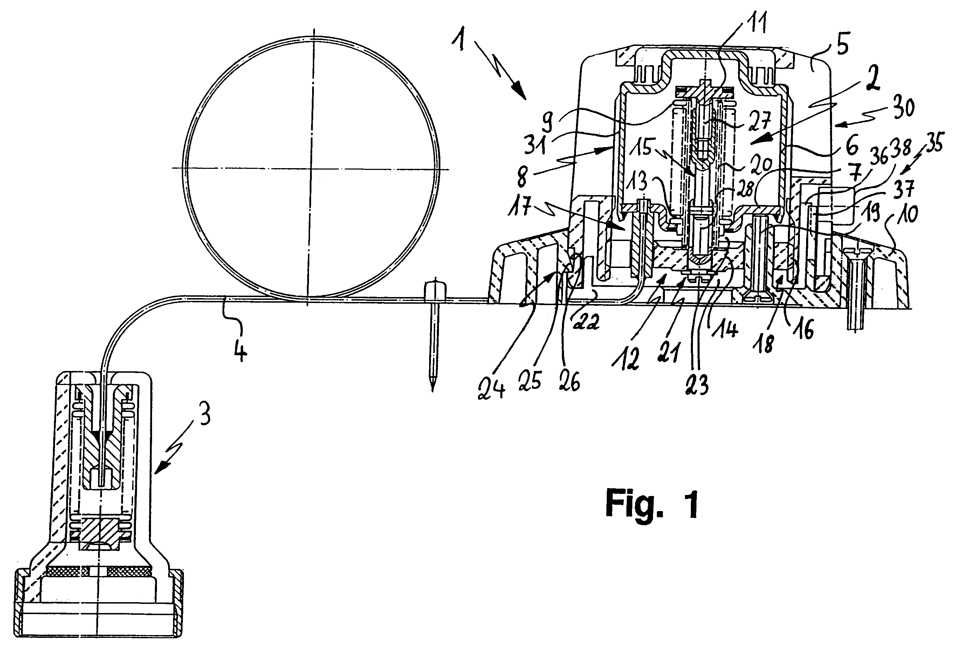

Bei dem in Fig. 1 dargestellten, flüssigkeitsgefüllten thermostatischen System zur Steuerung von in den Figuren nicht gezeigten Heizungsventilen stellt eine zur Sollwerttemperatureinstellung und als Fühler dienende Betätigungsvorrichtung 1 den Kernbereich der vorliegenden Erfindung dar. Diese Betätigungsvorrichtung 1 weist wiederum eine Überdrucksicherung 2 auf. Das erfindungsgemäße System weist desweiteren eine auf ein in den Figuren ebenfalls nicht gezeigtes Ventilgehäuse aufsetzbare, das Heizungsventil direkt beaufschlagende Arbeitseinrichtung 3 auf. Die Betätigungsvorrichtung 1 ist über ein Kapillarrohr 4 mit der Arbeitseinrichtung 3 verbunden.

Da sich die vorliegende Erfindung in erster Linie und schwerpunktmäßig auf die Ausgestaltung der Betätigungsvorrichtung 1 bezieht, ist die an sich bekannte Arbeitseinrichtung 3 nachfolgend nicht näher beschrieben. Gleiches gilt für das Kapillarrohr 4.

Fig. 1 zeigt desweiteren deutlich, daß die Betätigungsvorrichtung 1 einen Einstelldrehknopf 5 zum Einstellen der Soll-Temperatur aufweist. Dieser Einstelldrehknopf 5 ist vorzugsweise aus Kunststoff im Spritzgußverfahren hergestellt. Im montierten Zustand umgibt der Einstelldrehknopf 5 ein aus einer topfförmigen Kapsel 6 und einem Gehäuseboden 7 bestehendes Gehäuse 8. Innerhalb des Gehäuses 8 ist ein koaxial angeordnetes Wellrohr 9 vorgesehen.

Damit nun die Betätigungsvorrichtung 1 an einer Wand od. dgl. befestigt werden kann, ist eine eigens dazu vorgesehene Befestigungsvorrichtung 10 ausgebildet, die am hinteren Bereich des Gehäuses 8, also an dem der Wand zugewandten Teil der Betätigungsvorrichtung 1, ausgebildet ist. Das Gehäuse 8 und das Wellrohr 9 bilden gemeinsam einen veränderbaren Flüssigkeitsraum, der für das Kapillarrohr 4 mit der Arbeitseinrichtung 3 verbunden ist, so daß die darin befindliche Flüssigkeit bei einer temperaturbedingten Ausdehnung durch das Kapillarrohr 4 in die Arbeitseinrichtung 3 entweichen kann. Das Wellrohr 9 weist einen axial verstellbaren Wellrohrboden 11 auf, dessen axiale Verstellung mittels des Einstelldrehknopfes 5 und einer Einstellvorrichtung 12 erfolgt. Dazu wird die Drehbewegung des Einstelldrehknopfes 5 in eine axiale Verstellbewegung des Wellrohrbodens 11 umgeformt, was nachfolgend noch näher beschrieben wird.

Erfindungsgemäß ist das Wellrohr 9 mit seinem dem Einstelldrehknopf 5 abgewandten Ende 13 im Gehäuseboden 7 gehäusefest angeordnet. Dabei erstreckt sich das Wellrohr 9 vom Gehäuseboden 7 aus im wesentlichen außerhalb des von der Befestigungsvorrichtung 10 umgebenen Bereichs innerhalb des Gehäuses 8 zum Einstelldrehknopf 5 hin. Durch diese erfindungsgmäße Ausgestaltung ist gewährleistet, daß das Gehäuse 8 im wesentlichen außerhalb des Bereichs der Befestigungsvorrichtung 10 angeordnet ist. Folglich findet durch die Befestigungsvorrichtung 10 keine Abschirmung des Gehäuses 8 bzw. eines Teils des Gehäuses 8 statt. Folglich sind das Gehäuse 8, die darin befindliche Flüssigkeit und das Wellrohr 9 in idealer Weise der Raumtemperatur ausgesetzt.

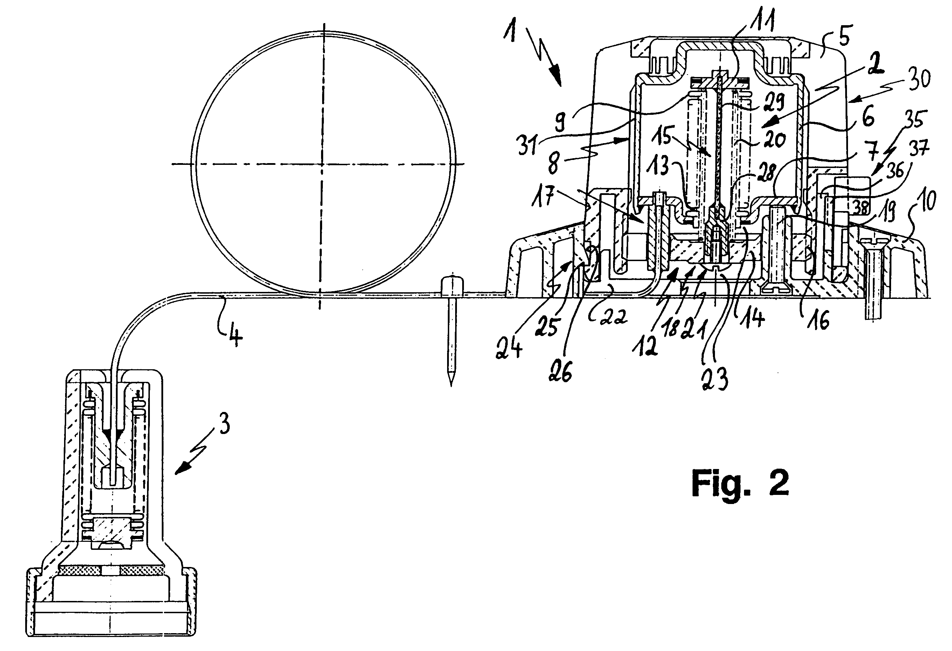

Die Fig. 1 und 2 zeigen gemeinsam, daß die Einstellvorrichtung 12 einen als Versteller dienenden, außerhalb des Gehäuses 8 angeordneten und gegen Drehen gesicherten Regulierteller 14 aufweist. Die Einstellvorrichtung 12 weist desweiteren eine sich von dem Regulierteller 14 aus durch den Gehäuseboden 7 hindurch durch das Wellrohr 9 zum Wellrohrboden 11 erstreckende Spanneinrichtung 15 auf. Der Einstelldrehknopf 5 ist über ein Gewinde 16 mit dem Regulierteller 14 wirkverbunden. Durch Drehen des Einstelldrehknopfes 5 wird der Regulierteller 14 zwischen einer vorderen Endposition 17 und einer hinteren Endposition 18 axial bewegt. Mit anderen Worten läßt sich der Regulierteller 14 und somit das Gehäuse 8 mit dem darin befindlichen Wellrohr 9 durch Drehen des Einstelldrehknopfes 5 axial verlagern. Die Drehbewegung des Einstelldrehknopfes 5 wird demnach über das Gewinde 16 bzw. die einerseits im hinteren Bereich des Einstelldrehknopfes 5 und im Randbereich des Reguliertellers 14 vorgesehenen, ineinandergreifenden Gewindegänge 16 in eine Axialbewegung umgewandelt.

Bei Annäherung des Reguliertellers 14 an die hintere Endposition 18 drückt das Gehäuse 8 bzw. der Gehäuseboden 7 gegen einen Anschlag 19, an dem es stets anliegt. Bei einer weiteren Bewegung des Reguliertellers 14 in Richtung der hinteren Endposition 18 wird nun das Wellrohr 9 gegen die Kraft einer Feder 20 durch die den Wellrohrboden 11 mit dem Regulierteller 14 verbindende Spanneinrichtung 15 zusammengedrückt. Über die Spanneinrichtung 15 zieht der Regulierteller 14 am Wellrohrboden 11, zieht diesen dabei in Richtung der hinteren Endposition 18 und drückt aufgrund der Anlage des Gehäuses 8 am Anschlag 19 das Wellrohr 9 gegen die Kraft der Feder 20 zusammen, wodurch sich das für die Flüssigkeit innerhalb des Gehäuses 8 zur Verfügung stehende Volumen vergrößert. Bei Annäherung des Reguliertellers 14 an die vordere Endposition 17 weist das Wellrohr 9 seine maximale Länge auf. In dieser Stellung ist das Wellrohr 9 durch die Spanneinrichtung 15 nicht zusammengedrückt, sondern weist eine Länge auf, die einerseits aus dem zur Verfügung stehenden Material des Wellrohres 9 selbst sowie aus der maximalen Baulänge der Spanneinrichtung 15 resultiert.

Damit eine bestimmte vorgegebene Kraft zum Zusammendrücken des Wellrohres 9 überwunden werden muß, ist die Feder 20 zwischen dem Wellrohrboden 11 und dem Gehäuseboden 7 unter Vorspannung eingebaut bzw. angeordnet. Das Wellrohr 9 bzw. die darin angeordnete Feder 20 dient als Übertemperatur- bzw. Überdrucksicherung, wobei das Wellrohr 9 bei Übertemperatur bzw. einem daraus resultierenden Überdruck in der Flüssigkeit gegen die Kraft der Feder 20 zusammengedrückt wird, so daß ein vergrößerter Raum für die Flüssigkeit zur Verfügung steht. Die im Wellrohr 9 angeordnete Feder 20 muß also so dimensioniert sein, daß vor Eintritt einer Beschädigung bei Überdruck die Feder 20 durch den Druck, bei dem eine Beschädigung gerade noch nicht eintritt, zusammengedrückt wird, so daß sich im Ergebnis keine weitere Druckerhöhung im System aufbauen kann.

Die Fig. 1 und 2 zeigen desweiteren, daß die Spanneinrichtung 15 mittels einer teilweise durch den Regulierteller 14 hindurchragenden bzw. hineinragenden Schraubeinrichtung 21 von der Rückseite des Reguliertellers 14 bzw. der Betätigungsvorrichtung 1 her justierbar ist. Durch diese Schraubeinrichtung 21 läßt sich das System bzw. die Betätigungsvorrichtung 1 dadurch eichen, daß bei vorgegebener Temperatur und Stellung des Einstelldrehknopfes 5 das Volumen des Gehäuses 8 durch Verringerung oder Erhöhung des vom Wellrohr 9 eingenommenen Volumens verändert wird.

Auf der dem Einstelldrehknopf 5 abgewandten Seite des Reguliertellers 14 ist mit Abstand dazu eine Abschlußplatte 22 zur Anlage an eine Wand od. dgl. vorgesehen. Diese Abschlußplatte 22 dient einerseits der besseren Anlage der Betätigungsvorrichtung 1 bzw. der besseren Befestigung der Betätigungsvorrichtung 1 an der Wand. Andererseits bringt die Abschlußplatte 22 den Vorteil mit sich, daß das die Flüssigkeit enthaltende Gehäuse 8 über zwischen dem Gehäuseboden 7 und dem Regulierteller 14 sowie zwischen dem Regulierteller 14 und der Abschlußplatte 22 befindliche Lufträume 23 von der Wand isoliert ist. Folglich besteht bei dem erfindungsgemäßen System nicht die Gefahr, daß die in der Regel kältere Wand über die tatsächliche Raumtemperatur hinwegtäuscht, so daß die Betätigungsvorrichtung 1 stets korrekt arbeitet.

Die Figuren zeigen desweiteren, daß die Abschlußplatte 22 mit der Befestigungsvorrichtung 10 verbunden ist. Dabei ist die Abschlußplatte 22 als integraler Bestandteil der Befestigungsvorrichtung 10 ausgeführt. Die Befestigungsvorrichtung 10 und die Abschlußplatte 22 könnten spritzgußtechnisch in einem Teil geformt sein. In diesem Falle bilden die Befestigungsvorrichtung 10 und die Abschlußplatte 22 gemeinsam eine Art Konsole.

Damit nun ein sicheres Einstellen der Betätigungsvorrichtung 1 durch den Einstelldrehknopf 5 möglich ist, damit dieser nämlich im Laufe des Gebrauchs sich nicht von der Befestigungsvorrichtung 10 löst, sind der Einstelldrehknopf 5 und die Befestigungsvorrichtung 10 mittels einer Rasteinrichtung 24 drehbar miteinander verbunden. Dabei lassen sich jegliche denkbaren Rastmechanismen realisieren, wobei stets vorausgesetzt sein muß, daß eine Drehbewegung zwischen dem Einstelldrehknopf 5 und der Befestigungsvorrichtung 10 möglich sein muß.

Bei dem in den Figuren dargestellten Ausführungsbeispiel weist die Befestigungsvorrichtung 10 eine Art Nase 25 auf, die beim Einstecken des Einstelldrehknopfes 5 in eine dort vorgesehene Ausnehmung 26 einrastet. Dabei könnte die Betätigungsvorrichtung 1 bzw. der Einstelldrehknopf 5 so ausgeführt sein, daß ein Entrasten der Rastvorrichtung 24 durch ein Spezialwerkzeug möglich ist, das die Nase 25 aus der Ausnehmung 26 herausdrückt.

Bei dem in Fig. 1 dargestellten Ausführungsbeispiel weist die Spanneinrichtung 15 eine Teleskopspindel 27 und ein Einstellstück 28 auf. Mittels des Einstellstückes 28 und der Schraubeinrichtung 21 läßt sich das Volumen des Gehäuses 8 durch Vorgabe des Volumens des Wellrohres 9 einstellen.

Bei dem in Fig. 2 dargestellten Ausführungsbeispiel weist die Spanneinrichtung 15 ein Seil 29 und ein Einstellstück 28 wie bei dem in Fig. 1 dargestellten Ausführungsbeispiel auf. Das Seil 29 besteht dabei aus einer Metallitze. Dieses Ausführungsbeispiel hat gegenüber dem in Fig. 1 dargestellten Ausführungsbeispiel den großen Vorteil, daß es einerseits konstruktiv weniger aufwendig, andererseits so ausgeführt ist, daß sich das Seil 29 beim Zusammendrücken des Wellrohres 9 aufgrund eines auftretenden Überdrucks auf kleinstem Raum innerhalb des Wellrohres 9 zusammenlegen kann und die Kompression des Wellrohres 9 innerhalb des durch das Wellrohr 9 selbst vorgegebenen zulässigen - schadfreien Bereich - nicht behindert. Ebenso könnte die Spanneinrichtung 15 eine vorzugsweise aus Metall bestehende Kette sowie das Einstellstück 28 aufweisen, was ähnliche Vorteile wie bei dem in Fig. 2 dargestellten Ausführungsbeispiel mit sich bringt.

Das in den beiden Figuren dargestellte Wellrohr 9 ist als Metallbalg ausgeführt. Der Wellrohrboden 11 bzw. Balgboden ist mit dem Wellrohr 9 verlötet, was eine gute Abdichtung des Wellrohrinneren gewährleistet.

Damit nun die Raumtemperatur ungehindert die Betätigungsvorrichtung 1 beeinflussen kann, damit also die Raumtemperatur direkt auf das Gehäuse 8 bzw. die darin befindliche Flüssigkeit wirkt, weist der Einstelldrehknopf 5 in besonders vorteilhafter Weise Luftdurchtrittsöffnungen 30 zur Belüftung der Außenwandung 31 des Gehäuses 8 auf. Diese Luftdurchtrittsöffnungen können als Bohrungen oder als Schlitze ausgeführt sein.

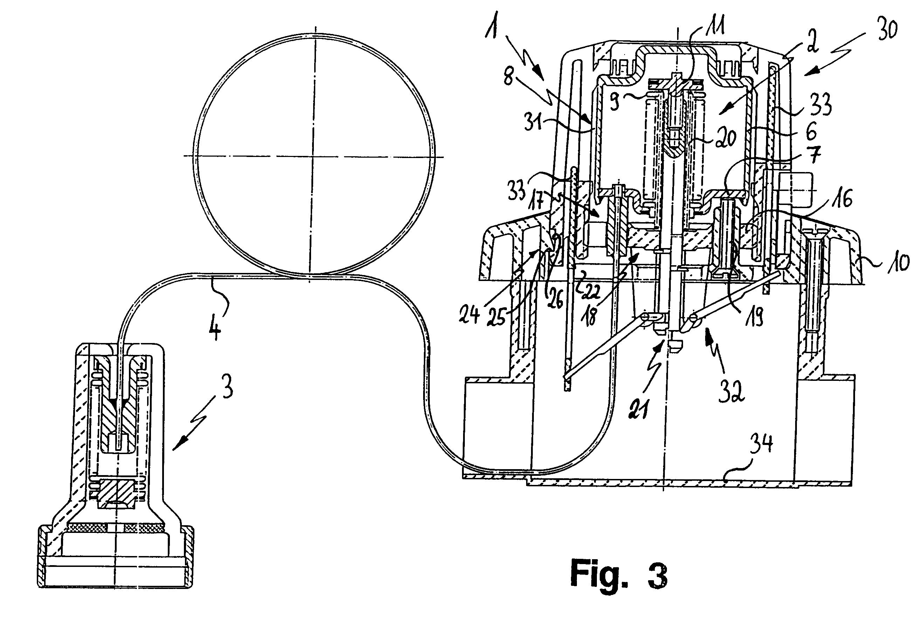

In Fig. 3 ist dargestellt, daß bei auftretender Übertemperatur bzw. bei Überdruck in der im Gehäuse 8 befindlichen Flüssigkeit die Luftdurchtrittsöffnungen 30 über ein vom Wellrohr 9 her betätigtes Getriebe 32 zumindest teilweise verschlossen werden können. Dieses Verschließen der Luftdurchtrittsöffnungen 30 soll verhindern, daß die erhöhte Raumtemperatur für einen weiteren Druckaufbau innerhalb des Gehäuses 8 sorgt und so das System beschädigt. Zur Verhinderung einer weiteren Beeinflussung des Gehäuses 8 bzw. der darin befindlichen Flüssigkeit durch die Raumtemperatur werden die Luftdurchtrittsöffnungen 30 beispielsweise mittels Lüftungsklappen verschlossen. Ebenso könnten die Luftdurchtrittsöffnungen 30 über eine die Luftdurchtrittsöffnungen 30 zumindest teilweise abdeckende Hülse 33 verschlossen werden. Diese zum Schließen der Luftdurchtrittsöffnungen 30 dienenden Klappen, Hülsen 33 od. dgl. müßten allerdings bei nicht aktivierter Überdruck- bzw. Übertemperatursicherung in eine hinter der Betätigungsvorrichtung 1 - vorzugsweise unter Putz - anzuordnende Schalterdose 34 hineinragen.

Die Fig. 1 bis 3 zeigen gemeinsam, daß zwischen dem Einstelldrehknopf 5 und der Konsole eine die Drehung des Einstelldrehknopfes 5 in einer vorgegebenen Drehposition verhindernde, manuell lösbare Arretiereinrichtung 35 wirkt und daß die Arretierung bei einer eine vorgegebene Temperatur regelnden Drehposition des Einstelldrehknopfes 5 erfolgt. Somit ist in besonders wirkungsvoller Weise eine Art Kindersicherung mit fester Temperaturvorgabe geschaffen, die sich über die Schraubeinrichtung 21 problemlos justieren läßt.

Die Arretiereinrichtung 35 weist einen der Konsole zugeordneten Anschlag 36, eine dem Einstelldrehknopf 5 zugeordnete Nase 37 sowie eine ebenfalls dem Einstelldrehknopf 5 zugeordnete Taste 38 oder dgl. auf. Der Anschlag 36 ist durch Betätigen der Taste 38 oder dgl. wegschiebbar bzw. wegdrückbar, so daß die Taste 38 oder dgl. als Entriegelungsmechanismus dient.

Schließlich ist den Fig. zu entnehmen, daß die Taste 38 oder dgl. integrierter Bestandteil des Einstelldrehknopfes 5 ist.

## Patentansprüche

1. Flüssigkeitsgefülltes thermostatisches System zur Steuerung von Heizungsventilen, mit einer zur Sollwert-Temperatureinstellung und als Fühler dienenden, eine Überdrucksicherung (2) aufweisenden Betätigungsvorrichtung (1) und einer auf ein Ventilgehäuse aufsetzbaren, das Heizungsventil direkt beaufschlagenden Arbeitseinrichtung (3), wobei die Betätigungsvorrichtung (1) über ein Kapillarrohr (4) mit der Arbeitseinrichtung (3) in Verbindung steht,
wobei die Betätigungsvorrichtung (1) einen Einstelldrehknopf (5), ein aus einer vorzugsweise topfförmigen Kapsel (6) und einem Gehäuseboden (7) bestehendes Gehäuse (8), ein innerhalb des Gehäuses (8) koaxial angeordnetes Wellrohr (9) und eine sich vorzugsweise kreisringförmig um das Gehäuse (8) erstreckende Befestigungsvorrichtung (10) zur Befestigung des Gehäuses (8) an einer Wand oder dgl. aufweist, wobei das Gehäuse (8) und das Wellrohr (9) gemeinsam einen veränderbaren Flüssigkeitsraum bilden und wobei das Wellrohr (9) einen mittels des Einstelldrehknopfes (5) und einer Einstellvorrichtung (12) axial verstellbaren Wellrohrboden (11) aufweist,
**dadurch gekennzeichnet,** daß das Wellrohr (9) mit seinem dem Einstelldrehknopf (5) abgewandten Ende (13) im Gehäuseboden (7) gehäusefest angeordnet ist und sich vom Gehäuseboden (7) aus im wesentlichen außerhalb des von der Befestigungsvorrichtung (10) umgebenen Bereichs innerhalb des Gehäuses (8) zum Einstelldrehknopf (5) hin erstreckt.

2. System nach Anspruch 1, dadurch gekennzeichnet, daß die Einstellvorrichtung (12) einen als Versteller dienenden, außerhalb des Gehäuses (8) angeordneten und gegen Drehen gesicherten Regulierteller (14) und eine sich von dem Regulierteller (14) aus durch den Gehäuseboden (7) hindurch durch das Wellrohr (9) zum Wellrohrboden (11) erstreckende Spanneinrichtung (15) aufweist, wobei der Einstelldrehknopf (5) über ein Gewinde (16) mit dem Regulierteller (14) wirkverbunden ist und daß durch Drehen des Einstelldrehknopfes (5) der Regulierteller (14) zwischen einer vorderen Endposition (17) und einer hinteren Endposition (18) axial bewegbar ist.

3. System nach Anspruch 2, dadurch gekennzeichnet, daß bei Bewegung des Reguliertellers (14) in Richtung der hinteren Endposition (18) das Wellrohr (9) gegen die Kraft einer Feder (29) durch die den Wellrohrboden (11) mit dem Regulierteller (14) verbindende Spanneinrichtung (15) zusammengedrückt wird, daß bei Annäherung des Reguliertellers (14) an die vordere Endposition (17) das Wellrohr (9) seine maximale Länge aufweist und daß die Feder (20) zwischen dem Wellrohrboden (11) und dem Gehäuseboden (7) unter Vorspannung angeordnet ist und als Übertemperatur- bzw. Überdrucksicherung dient, wobei das Wellrohr (9) bei Übertemperatur bzw. Überdruck gegen die Kraft der Feder (20) zusammengedrückt wird.

4. System nach Anspruch 2 oder 3, dadurch gekennzeichnet, daß die Spanneinrichtung (15) mittels einer zumindest teilweise durch den Regulierteller (14) hindurchragenden Schraubeinrichtung (21) - von der Rückseite des Reguliertellers (14) bzw. der Betätigungsvorrichtung (1) her - justierbar ist.

5. System nach einem der Ansprüche 2 bis 4, dadurch gekennzeichnet, daß auf der dem Einstelldrehknopf (5) abgewandten Seite des Reguliertellers (14) mit Abstand dazu eine Abschlußplatte (22) zur Anlage an eine Wand oder dgl. vorgesehen ist, so daß das die Flüssigkeit enthaltende Gehäuse (8) über zwischen dem Gehäuseboden (7) und dem Regulierteller (14) sowie dem Regulierteller (14) und der Abschlußplatte (22) befindliche Lufträume (23) von der Wand isoliert ist, daß die Abschlußplatte (22) mit der Befestigungsvorrichtung (10) verbunden oder als integraler Bestandteil der Befestigungsvorrichtung (10) ausgeführt ist und daß die Befestigungsvorrichtung (10) und die Abschlußplatte (22) vorzugsweise gemeinsam eine Konsole bilden.

6. System nach einem der Ansprüche 2 bis 5, dadurch gekennzeichnet, daß die Spanneinrichtung (15) eine Teleskopspindel (27), ein vorzugsweise aus Metallitze bestehendes Seil (29) oder eine vorzugsweise aus Metall bestehende Kette und ein Einstellstück (28) aufweist.

7. System nach einem der Ansprüche 1 bis 6, dadurch gekennzeichnet, daß das Wellrohr (9) als Metallbalg ausgeführt ist und daß der Balgboden mit dem Wellrohr (9) verlötet ist.

8. System nach einem der Ansprüche 1 bis 7, dadurch gekennzeichnet, daß der Einstelldrehknopf (5) Luftdurchtrittsöffnungen (39) zur Belüftung der Außenwandung (31) des Gehäuses (8) aufweist, daß bei Übertemperatur die Luftdurchtrittsöffnungen (30) - über ein vom Wellrohr (9) her betätigtes Getriebe (32) - zumindest teilweise verschlossen werden und daß die Luftdurchtrittsöffnungen (30) entweder mittels Lüftungsklappen oder über eine die Luftdurchtrittsöffnungen (30) zumindest teilweise abdeckende Hülse (33) verschlossen werden.

9. System nach Anspruch 8, dadurch gekennzeichnet, daß die zum Schließen der Luftdurchtrittsöffnungen (30) dienenden Klappen, Hülse (33) oder dgl. in eine hinter der Betätigungsvorrichtung (1), vorzugseise unter Putz, anzuordnende Schalterdose (34) hineinragen.

10. System nach einem der Ansprüche 1 bis 9, dadurch gekennzeichnet, daß zwischen dem Einstelldrehknopf (5) und der Konsole eine die Drehung des Einstelldrehknopfes (5) in einer vorgegebenen Drehposition verhindernde, manuell lösbare Arretiereinrichtung (35) wirkt, daß die Arretierung bei einer eine vorgegebene Temperatur regelnden Drehposition des Einstelldrehknopfes (5) erfolgt, daß die Arretiereinrichtung (35) einen der Konsole zugeordneten Anschlag (36), eine dem Einstelldrehknopf (5) zugeordnete Nase (37) sowie eine ebenfalls dem Einstelldrehknopf (5) zugeordnete Taste (38) oder dgl. aufweist, daß der Anschlag (36) durch Betätigen der Taste (38) oder dgl. wegschiebbar bzw. wegdrückbar ist, so daß die Taste (38) oder dgl. als Entriegelungsmechanismus dient und daß die Taste (38) oder dgl. integrierter Bestandteil des Einstelldrehknopfes (5) ist.

## Claims

1. Fluid-filled thermostatic system for controlling heating valves, having an actuating device (1) which is used for setting the nominal value temperature and as a sensor, and which comprises an excess pressure safety device (2), and having an operating device (3) which can be mounted on a valve housing and acts directly on the heating valve, the actuating device (1) being connected to the operating device (3) via a capillary tube (4), the actuating device (1) comprising a rotary setting knob (5), a housing (8) consisting of a preferably pot-shaped cap (6) and a housing base (7), an undulating tube (9) which is disposed coaxially inside the housing (8), and a securing device (10) which extends in a preferably circular ring-shaped manner about the housing (8) in order to secure the housing (8) to a wall or the like, the housing (8) and the undulating tube (9) together forming a variable fluid chamber, and the undulating tube (9) comprising an undulating tube base (11) which can be axially adjusted by means of the rotary setting knob (5) and a setting device (12), characterised in that the end (13), of the undulating tube (9), remote from the rotary setting knob (5) is disposed such that it is rigid with the housing in the housing base (7) and extends from the housing base (7) substantially externally of the area surrounding the securing device (10) within the housing (8) to the rotary setting knob (5).

2. System according to Claim 1, characterised in that the setting device (12) comprises a regulating plate (14), which acts as an adjusting device, which is disposed externally of the housing (8), and which is secured against rotation, and a clamping device (15) which extends from the regulating plate (14) through the housing base (7) and through the undulating tube (9) to the undulating tube base (11), the rotary setting knob (5) being operationally connected to the regulating plate (14) via a thread (16); and in that the regulating plate (14) can be moved axially between a front end position (17) and a rear end position (18) by rotating the rotary setting knob (15).

3. System according to Claim 2, characterised in that, when the regulating plate (14) moves in the direction of the rear end position (18), the undulating tube (9) is compressed against the force of a spring (29) by the clamping device (15) connecting the undulating tube base (11) to the regulating plate (14); in that, when the regulating plate (14) approaches the front end position (17), the undulating tube (9) is at its maximum length; and in that the spring (20) is disposed under pretension between the undulating tube base (11) and the housing base (7) and acts as an excess temperature and/or excess pressure safety device, the undulating tube (9) being compressed against the force of the spring (20) when there is excess temperature or excess pressure.

4. System according to Claim 2 or 3, characterised in that the clamping device (15) can be adjusted by means of a screw device (21) which projects at least partially through the regulating plate (14) - from the reverse of the regulating plate (14) and/or of the actuating device (1).

5. System according to any one of Claims 2 to 4, characterised in that, on the side of the regulating plate (14) remote from the rotary setting knob (5) and at a distance therefrom, a closure plate (22) for abutting a wall or the like is provided such that the housing (8) containing the fluid is insulated from the wall by means of air spaces (23) located between the housing base (7) and the regulating plate (14) as well as between the regulating plate (14) and the closure plate (22); in that the closure plate (22) is connected to the securing device (10) or is in the form of an integral component of the securing device (10); and in that the securing device (10) and the closure plate (22) preferably together form a bracket.

6. System according to any one of Claims 2 to 5, characterised in that the clamping device (15) comprises a telescopic spindle (27), a cable (29), preferably consisting of a metal wire or a chain preferably consisting of metal, and an adjusting member (28).

7. System according to any one of Claims 1 to 6, characterised in that the undulating tube (9) is in the form of metal bellows; and in that the base of the bellows is soldered to the undulating tube (9).

8. System according to any one of Claims 1 to 7, characterised in that the rotary setting knob (5) comprises air passage openings (30) for ventilating the outer wall (31) of the housing (8); in that, when there is excess temperature, the air passage openings (30) are closed at least partially by means of a gear unit (32) actuated by the undulating tube (9); and in that the air passage openings (30) are closed either by means of ventilation flaps or via a sleeve (33) which covers the air passage openings (30) at least partially.

9. System according to Claim 8, characterised in that the flaps, sleeve (33) or the like used to close the air passage openings (30) project into a switch socket (32) to be disposed behind the actuating device (1), preferably under plaster.

10. System according to any one of Claims 1 to 9, characterised in that a manually detachable locking device (35) acts between the rotary setting knob (5) and the bracket and prevents the rotation of the rotary setting knob (5) in a predetermined rotational position; in that locking occurs at a rotational position of the rotary setting knob (5) regulating a predetermined temperature; in that the locking device (35) comprises a stop (36) associated with the bracket, a projection (37) associated with the rotary setting knob (5), and a key (38) or the like which is likewise associated with the rotary setting knob (5); in that the stop (36) can be slid away or pushed away by actuating the key (38) or the like such that the key (38) or the like acts as an unlocking mechanism; and in that the key (38) or the like is an integral component of the rotary setting knob (5).

## Revendications

1. Système thermostatique rempli d'un liquide pour la commande de vannes de chauffage, avec un dispositif de commande (1) servant au réglage d'une température de consigne et de capteur, et présentant une sécurité contre les surpressions (2) et avec un dispositif de travail (3) pouvant être monté sur le boîtier de la vanne et agissant directement sur la vanne de chauffage, le dispositif de commande (1) étant par l'intermédiaire d'un tube capillaire (4) en communication avec le dispositif de travail (3), système dans lequel le dispositif de commande (1) présente un bouton rotatif de réglage (5), un boîtier (8) constitué d'un capuchon (6) de préférence en forme de pot et d'un fond de boîtier (7), et présente en outre un tube ondulé (9) disposé de manière coaxiale à l'intérieur du boîtier (8) et un dispositif de fixation (10) entourant de préférence en forme de cercle le boîtier (8) pour la fixation du boîtier (8) à un mur ou similaire, le boîtier (8) et le tube ondulé (9) constituant conjointement une chambre de liquide à volume variable et le tube ondulé (9) présentant une base (11) réglable en direction axiale au moyen du bouton rotatif de réglage (5) et d'un dispositif de réglage (12),
caractérisé par le fait que le tube ondulé (9) est à l'extrémité (13) qui est écartée du bouton rotatif de réglage (5) monté de manière fixe dans la base (7) du boîtier et s'étend depuis la base (7) du boîtier, en substance extérieurement à la zone ceinturée par le dispositif de fixation (10), à l'intérieur du boîtier (8) en direction du bouton rotatif de réglage (5).

2. Système suivant la revendication 1, caractérisé par le fait que le dispositif de réglage (12) présente un plateau de réglage (14) disposé à l'extérieur du boîtier (8) et verrouillé contre la rotation et un dispositif tendeur (15) issu du plateau de réglage (14) et passant à travers la base (7) du boîtier et à travers le tube ondulé (9) jusqu'à la base (11) du tube ondulé, le bouton rotatif de réglage (5) étant par l'intermédiaire d'un filetage (16) en liaison active avec le plateau de réglage (14), et par le fait que par la rotation du bouton rotatif de réglage (5), le plateau de réglage (14) peut être mû en direction axiale entre une position terminale antérieure (17) et une position terminale postérieure (18).

3. Système suivant la revendication 2, caractérisé par le fait que lors du déplacement du plateau de réglage (14) en direction de la position terminale postérieure (18), le tube ondulé (9) est, à l'encontre de l'action d'un ressort (29), comprimé par le dispositif tendeur (15) reliant la base du tube ondulé (11) au plateau de réglage (14), par le fait que lorsque le plateau de réglage (14) se rapproche de la position terminale antérieure (17), le tube ondulé (9) présente sa longueur maximale et par le fait que le ressort (20) est disposé sous précontrainte entre la base (11) du tube ondulé et la base (7) du boîtier, et sert de sécurité contre un dépassement de température ou un dépassement de pression, le tube ondulé (9) étant, en cas de température exagérée ou de surpression, comprimé à l'encontre de l'action exercée par le ressort (20).

4. Système suivant la revendication 2 ou la revendication 3, caractérisé par le fait que le dispositif tendeur (15) peut être ajusté au moyen d'un dispositif à vis (21) traversant au moins partiellement le plateau de réglage (14) depuis la face arrière du plateau de réglage (14) ou du dispositif de commande (1).

5. Système suivant l'une quelconque des revendications de 2 à 4, caractérisé par le fait que du côté du plateau de réglage (14) qui n'est pas orienté vers le bouton rotatif de réglage (5) est prévue à distance de ce plateau une plaque de fermeture (22) pour l'application contre un mur ou similaire, de telle sorte que le boîtier (8) contenant le liquide est, par des enceintes d'air (23) situées entre la base (7) du boîtier et le plateau de réglage (14) ainsi qu'entre le plateau de réglage (14) et la plaque de fermeture (22), isolé par rapport au mur, par le fait que la plaque de fermeture (22) est reliée au dispositif de fixation (10) ou constitue une partie intégrante du dispositif de fixation (10) et par le fait que le dispositif de fixation (10) et la plaque de fermeture (22) constituent de préférence conjointement une console.

6. Système suivant l'une quelconque des revendications de 2 à 5, caractérisé par le fait que le dispositif tendeur (15) présente une broche télescopique (27), un câble (29) constitué de préférence par des cordons métalliques ou une chaîne constituée de préférence d'éléments métalliques et une pièce de réglage (28).

7. Système suivant l'une quelconque des revendications de 1 à 6, caractérisé par le fait que le tube ondulé (9) a la forme d'un soufflet métallique et par le fait que la base du soufflet est reliée par soudage au tube ondulé (9).

8. Système suivant l'une quelconque des revendications de 1 à 7, caractérisé par le fait que le bouton rotatif de réglage (5) présente des orifices de passage d'air (30) pour la ventilation de la paroi extérieure (31) du boîtier (8), par le fait que dans le cas d'une température exagérée, les orifices de passage d'air (30) sont, par l'intermédiaire d'une transmission (32) actionnée par le tube ondulé (9), obturées au moins partiellement et par le fait que les orifices de passage d'air (30) sont obturées soit au moyen de clapets de ventilation, soit au moyen d'une douille (33) recouvrant au moins partiellement les orifices de passage d'air (30).

9. Système suivant la revendication 8, caractérisé par le fait que les clapets, la douille (33) ou similaire servant à l'obturation des orifices de passage d'air (30) s'engagent dans une boîte d'embranchement (34) qui est disposée derrière le dispositif de commande (1) de préférence sous un enduit.

10. Système suivant l'une quelconque des revendications de 1 à 9, caractérisé par le fait qu'entre le bouton rotatif de réglage (5) et la console agit un dispositif d'arrêt libérable manuellement (35) empêchant la rotation du bouton de réglage (5) occupant une position de consigne, par le fait que l'arrêt se produit lorsque le bouton rotatif de réglage (5) occupe une position correspondant à une température de consigne, par le fait que le dispositif d'arrêt (35) présente une butée (36) associée à la console, un nez (37) associé au bouton rotatif de réglage (5) ainsi qu'une touche (38) ou similaire associée également au bouton rotatif de réglage (5), par le fait que la butée (36) peut être déplacée ou éloignée par la manoeuvre de la touche (38) ou similaire, de telle sorte que la touche (38) ou similaire sert de mécanisme de déverrouillage, et par le fait que la touche (38) ou similaire est une pièce faisant partie intégrante du bouton rotatif de réglage (5).
